# EUROPEAN PATENT APPLICATION

(11) **EP 4 557 721 A1**
(43) Date of publication of application: **21.05.2025**
(21) Application number: 24208650.2
(22) Date of filing: 24.10.2024
(51) Int. Cl.: H04N 7/18, G06V 20/40

(54) **DATA PROCESSING TECHNOLOGY USING AUDIO FEATURE ENCODING**

(30) Priority: 13.11.2023 KR 20230156761
(71) Applicant: Hanwha Vision Co., Ltd., Seongnam-si, Gyeonggi-do 13488 (KR)
(72) Inventor: Lim, Jeongeun, 13488 Seongnam-si, Gyeonggi-do (KR); Han, Seungyeon, 13488 Seongnam-si, Gyeonggi-do (KR); Kim, Seonghee, 13488 Seongnam-si, Gyeonggi-do (KR)
(74) Representative: Gulde & Partner

(57) **Abstract**

Provided is a method. The method includes obtaining video data and audio data and extracting a video feature and/or audio feature from the obtained video data and/or audio data, detecting a preset event on the basis of one or more of the video feature and the audio feature, , performing conversion processing and encoding processing on the video feature related to the detected event and the audio feature related to the detected event, and generating transmission data including the video feature and the audio feature on which the conversion processing and the encoding processing have been performed.

## Description

### CROSS-REFERENCE TO RELATED APPLICATION

This application claims priority to and the benefit of Korean Patent Application No. 10-2023-0156761, filed on November 13, 2023, the disclosure of which is incorporated herein by reference in its entirety.

### BACKGROUND

### 1. Field of the Invention

The present disclosure relates to a data processing technology using audio feature encoding.

### 2. Discussion of Related Art

Closed-circuit televisions (CCTVs) are increasingly installed for video surveillance and security, and CCTV systems equipped with Internet Protocol (IP) cameras and network video recorder (NVR) servers or video management system (VMS) servers are increasing. A CCTV system includes at least one camera that captures a video, a digital video recorder (DVR) or an NVR that is connected to at least one camera with unshielded twisted pair (UTP) cables to compress and store video data from each camera, and a storage device that is connected to the DVR or the NVR, and the CCTV system transmits a video from each camera channel to a monitoring server or an administrator terminal through a network.

Data for videos captured by CCTV cameras may be used in various cases, such as the case of committing a criminal act (e.g., threatening a passerby with a knife or shooting a gun, etc.), the case where more than a certain number of people enter a specific area, the case where defects in production equipment or defects in manufactured products are detected in production plants, etc. However, in the case where it is difficult to identify an object using video data at night or the case where it is not possible to know from video alone whether an event has occurred (e.g., when an explosion occurred nearby but the explosion was not captured in the captured video, etc.), it is difficult to detect the occurrence of an event using only video data.

Further, when data for a video captured by a CCTV camera is transmitted together with audio data through a network, large amounts of transmission data are generated. As the resolution of a CCTV camera increases, the size of transmission data increases, and broadband transmission bandwidth are required to transmit such large amounts of video and audio data. Therefore, it is necessary to introduce a technology for reducing transmission bandwidth of audio and video data for security and surveillance according to machine processing.

### SUMMARY OF THE INVENTION

The present disclosure is directed to providing a data processing technology for improving accuracy of event detection compared to the related art.

The present disclosure is also directed to providing a technology for reducing transmission bandwidth when transmitting video data and audio data according to machine processing.

According to an aspect of the present disclosure, there is provided a method. The method may include obtaining video data and audio data and extracting a video feature and/or an audio feature from related obtained video data and/or audio data, detecting a preset event on the basis of one or more of the video feature and the audio feature, performing conversion processing and encoding processing on the video feature related to the detect event and the audio feature related to the detect event and generating transmission data including the video feature and the audio feature on which the conversion processing and the encoding processing have been performed. This method has the advantageous effect that conversion and/or encoding processing and the generation of transmission data can be omitted in case where an event is not detected, thus saving transmission bandwidth by performing event detection locally and by conditionally performing subsequent steps.

According to an aspect of the present disclosure, there is provided a method. The method may include obtaining video data and extracting a video feature from the obtained video data, obtaining audio data related to the video data and extracting an audio feature from the obtained audio data, detecting a preset event on the basis of one or more of the video feature and the audio feature, when the preset event is detected, performing conversion processing and encoding processing on the video feature and the audio feature, and generating transmission data including the video feature and the audio feature on which the conversion processing and the encoding processing have been performed. This method has the advantageous effect that conversion and/or encoding processing and the generation of transmission data can be omitted in case where an event is not detected, thus saving transmission bandwidth by performing event detection locally and by conditionally performing subsequent steps.

According to another aspect of the present disclosure, there is provided a method. The method may include obtaining audio data and extracting an audio feature from the obtained audio data, detecting a preset event on the basis of the audio feature, when the preset event is detected, extracting a video feature from video data related to the detected event, performing conversion processing and encoding processing on the video feature and the audio feature, and generating transmission data including the video feature and the audio feature on which the conversion processing and the encoding processing have been performed. This has the further advantageous effect that extraction of video features can be omitted in case where a feature is not detected, thus saving computational resources by performing video feature extraction conditionally.

According to an another aspect of the present disclosure, there is provided a method. The method may include obtaining video data and extracting an video feature from the obtained video data, detecting a preset event on the basis of the video feature, when the preset event is detected, extracting an audio feature from audio data related to the detected event, performing conversion processing and encoding processing on the video feature and the audio feature, and generating transmission data including the video feature and the audio feature on which the conversion processing and the encoding processing have been performed. This has the further advantageous effect that extraction of audio features can be omitted in case where a feature is not detected, thus saving computational resources by performing video feature extraction conditionally.

In the detecting of the preset event, when a condition related to the preset event is satisfied in both the video feature and the audio feature, it may be determined that the preset event has been detected. Alternatively, in the detecting of the preset event, when a condition related to the preset event is satisfied in any one of the video feature and the audio feature, it may be determined that the preset event has been detected.

The performing of the conversion processing and the encoding processing may include converting the video feature and encoding the converted video feature to generate video feature encoded data, and converting the audio feature and encoding the converted audio feature to generate audio feature encoded data. Here, the transmission data may include the video feature encoded data and the audio feature encoded data.

The performing of the conversion processing and encoding processing may include converting the video feature, converting the audio feature, and fusing the converted video feature and the converted audio feature to generate fusion feature data. Here, the transmission data may include fusion-encoded data generated by encoding the fusion feature data.

The transmission data may include metadata related to the detected event.

The transmission data may include time stamp information for synchronization of the video feature and the audio feature.

The performing of the conversion processing and the encoding processing may include converting the video feature and encoding the converted video feature to generate video feature encoded data, and converting the audio feature and encoding the converted audio feature to generate audio feature encoded data. Here, the transmission data may include the video feature encoded data and the audio feature encoded data.

The performing of the conversion processing and encoding processing may include converting the video feature, converting the audio feature, and fusing the converted video feature and the converted audio feature to generate fusion feature data. Here, the transmission data may include fusion-encoded data obtained by encoding the generated fusion feature data.

The transmission data may include metadata related to the detected event. The transmission data may include time stamp information for synchronization of the video feature and the audio feature.

According to still another aspect of the present disclosure, there is provided a program stored in a recording medium to allow a computer to perform the method.

According to yet another aspect of the present disclosure, there is provided a data processing device. The data processing device may include a memory configured to store input data, and a processor coupled to the memory. The processor may be configured to perform operations including obtaining video data and extracting a video feature from the obtained video data, obtaining audio data related to the video data and extracting an audio feature from the obtained audio data, detecting a preset event on the basis of one or more of the video feature and the audio feature, when the preset event is detected, performing conversion processing and encoding processing on the video feature and the audio feature, and generating transmission data including the video feature and the audio feature on which the conversion processing and the encoding processing have been performed.

According to yet another aspect of the present disclosure, there is provided a data processing device. The data processing device may include a memory configured to store input data, and a processor coupled to the memory. The processor may be configured to perform operations including obtaining audio data and extracting an audio feature from the obtained audio data, detecting a preset event on the basis of the audio feature, when the preset event is detected, extracting a video feature from video data related to the detected event, performing conversion processing and encoding processing on the video feature and the audio feature, and generating transmission data including the video feature and the audio feature on which the conversion processing and the encoding processing have been performed.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a diagram illustrating a connection relationship between a data processing device and other components according to an embodiment of the present disclosure;
FIG. 2 is a block diagram illustrating a configuration of the data processing device according to the present disclosure;
FIG. 3 is a diagram illustrating an example of the configuration of the data processing device according to the present disclosure;
FIG. 4 is a diagram illustrating an example of another configuration of the data processing device according to the present disclosure;
FIG. 5a is a diagram illustrating an example of still another configuration of the data processing device according to the present disclosure;
FIG. 5b is a diagram illustrating an example of still another configuration of the data processing device according to the present disclosure;
FIG. 6 is a diagram illustrating an example of yet another configuration of the data processing device according to the present disclosure;
FIG. 7 is a diagram illustrating an example of yet another configuration of the data processing device according to the present disclosure;
FIG. 8 is a diagram illustrating an example of a method of extracting a feature of audio data according to the present disclosure;
FIG. 9 is a flowchart illustrating an example of a method performed by the data processing device according to the present disclosure; and
FIG. 10 is a flowchart illustrating an example of the method performed by the data processing device according to the present disclosure.

### DETAILED DESCRIPTION OF EXEMPLARY EMBODIMENTS

Specific structural or step-by-step descriptions of embodiments of the present disclosure are merely for describing examples according to the concept of the present disclosure. Therefore, embodiments according to the concept of the present disclosure may be implemented in various forms. Embodiments according to the concept of the present disclosure may be implemented in various forms. The present disclosure should not be construed as limited to the embodiments of the present disclosure.

While the present disclosure is open to various modifications and alternative forms, specific embodiments thereof are shown by way of example in the accompanying drawings and will herein be described in detail. However, there is no intent to limit the present disclosure to the particular forms disclosed. On the contrary, it should be understood that the present disclosure is to cover all modifications, equivalents, and alternatives falling within the spirit and scope of the present disclosure.

It will be understood that, although the terms "first," "second," etc., may be used herein to describe various components, these components should not be limited by these terms. These terms are used only to distinguish one component from another component. For example, a first component could be termed a second component, and similarly, a second component could be termed a first component without departing from the scope of the present disclosure.

It should be understood that when a first component is referred to as being "connected" or "coupled" to a second component, the first component may be directly connected or coupled to the second component. However, it should be understood that other components may be present among a plurality of components. In contrast, when a component is referred to as being "directly connected" or "directly coupled" to another component, there are no intervening components present. Other words used to describe the relationship between components should be interpreted in a like fashion (i.e., "between" versus "directly between," "adjacent" versus "directly adjacent," and the like).

The terminology used herein is for the purpose of describing particular embodiments only and is not intended to be limiting to the present disclosure. As used herein, the singular forms "a" and "an" are intended to also include the plural forms, unless the context clearly indicates otherwise. It should be further understood that the terms "comprise," "comprising," "include," and/or "including" used herein specify the presence of stated features, integers, steps, operations, components, parts, or combinations thereof, but do not preclude the presence or addition of one or more other features, integers, steps, operations, components, parts, or combinations thereof.

As used herein, the terms "when" and "if" are intended to be to be interchangeable, unless the context clearly indicates otherwise.

Unless otherwise defined, all terms including technical and scientific terms used herein have the same meaning as commonly understood by one of ordinary skill in the art to which the present disclosure belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

In describing embodiments, descriptions of technical content that is well known in the technical field to which the present disclosure belongs and that are not directly related to the present disclosure will be omitted. This is to convey the gist of the present disclosure more clearly without obscuring it by omitting unnecessary explanation.

Hereinafter, the present disclosure will be described in detail by describing exemplary embodiments of the present disclosure with reference to the accompanying drawings. Hereinafter, the embodiments of the present disclosure will be described in detail with reference to the accompanying drawings.

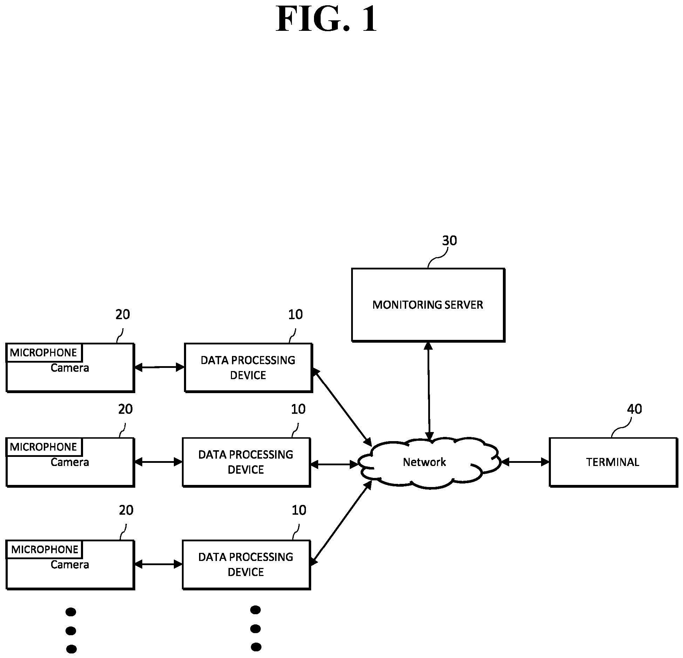

FIG. 1 is a diagram illustrating a connection relationship between a data processing device and other components according to an embodiment of the present disclosure.

Referring to FIG. 1, a data processing device 10 may be connected to a camera 20 and receive, store, and process data of a video captured by the camera 20. The data processing device 10 may be connected to one camera 20 or to a plurality of cameras 20. The camera 20 is equipped with a microphone and may generate audio data including voice and sound near a photographing region together with video data. The microphone may be embedded into the camera 20 or may be configured separately from the camera 20.

The data processing device 10 may be connected to a monitoring server 30 through a network. The data processing device 10 may process the video and/or audio data generated by the camera 20 to generate transmission data, and transmit the generated transmission data to the monitoring server 30. The transmission data may include a video feature and an audio feature. Further, the transmission data may include a fusion feature in which the video feature and the audio feature are fused.

The data processing device 10 may process the video and/or audio data generated by the camera 20 to generate transmission data using a typical video codec or audio codec, and transmit the generated transmission data to the monitoring server 30. The transmission data may include video data or audio data encoded using a typical video codec or audio codec.

The monitoring server 30 may restore video and/or audio feature data from the transmission data. The monitoring server 30 may restore video and/or audio feature information from the transmission data, and use the restored feature information for processing by a machine.

The monitoring server 30 may restore original video and/or audio data from the transmission data. The monitoring server 30 may restore the video and/or audio data from the transmission data, and transmit the restored video and/or audio data to a terminal 40.

The terminal 40 used by a user or administrator may be connected to the monitoring server 30 through a network. The terminal 40 may receive the video data and the audio data that are generated by the camera 20 and information related to the video and/or audio data from the monitoring server 30, or receive a result of processing, by the machine, the audio data and the video data.

The camera 20 may photograph a monitoring target region to obtain video data for the monitoring target region. The camera 20 may photograph the monitoring target region in real time for surveillance or security purposes. The camera 20 may be a pan-tilt-zoom (PTZ) camera capable of panning and tilting and with an adjustable zoom ratio of a lens thereof. The camera 20 may be provided as a plurality of cameras.

The cameras 20 may communicate with network devices using various communication methods such as a wired or wireless local area network (LAN), Wi-Fi, ZigBee, Bluetooth, near-field communication, etc. For example, the cameras 20 may communicate with each other according to a low-power wireless communication protocol using radio frequencies in industrial-scientific-medical (ISM) bands.

The data processing device 10 may store video data and audio data that are received from the camera 20, and provide transmission data obtained by processing the stored video and audio data to the monitoring server 30 through a network. The monitoring server 30 may restore original video and audio features by decoding the video and audio features included in the transmission data. The monitoring server 30 may use the restored video and audio features for machine processing. Through machine processing, a specific object may be recognized, an event may be detected, or information on an object related to the event may be recognized through metadata without an administrator.

The network may include a wired network or a wireless network. The wireless network may be a 2^{nd} generation (2G) or 3^{rd} generation (3G) cellular communication system, a 3^{rd} Generation Partnership Project (3GPP), a 4^{th} generation (4G) communication system, Long-Term Evolution (LTE), World Interoperability for Microwave Access (WiMAX), etc.

The terminal 40 may include a terminal used by an administrator or user of the monitoring server 30. The terminal 40 may access the monitoring server 30 through the network and receive and process monitoring data provided by the monitoring server 30.

The data processing device 10 may be a digital video recorder, a network video recorder, etc., but the present disclosure is not limited thereto. The data processing device 10 may be implemented as a single physical device or implemented by organically combining a plurality of physical devices. The data processing device 10 may be configured as a device integrated with the camera 20.

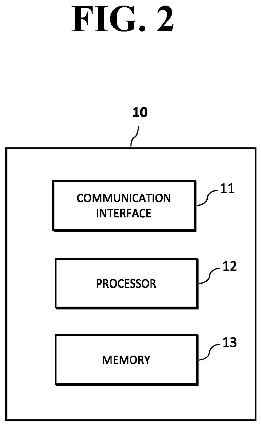

**FIG. 2** **is a block diagram illustrating a configuration of the data processing** device **according to the present disclosure.**

Referring to FIG. 2, the data processing device 10 may include a communication interface 11, a processor 12, and a memory 13. The processor 12 may be configured to allow a program stored in a recording medium to perform a plurality of operations of a method.

The communication interface 11 may receive video data and audio data from the plurality of cameras 20. The communication interface 11 may be configured to transmit transmission data generated by the data processing device 10 to the monitoring server 30 through a network.

The processor 12 may obtain video data and extract a video feature from the obtained video data. The processor 12 may obtain audio data related to the video data and extract an audio feature from the obtained audio data. The processor 12 may detect a preset event on the basis of one or more of the video feature and the audio feature. When the preset event is detected, the processor 12 may perform conversion processing and encoding processing on the video feature and the audio feature. The processor 12 may generate transmission data including the video feature and the audio feature on which the conversion processing and the encoding processing have been performed.

Further, the processor 12 may obtain audio data, extract an audio feature from the obtained audio data, and detect a preset event on the basis of the extracted audio feature. When the preset event is detected, the processor 12 may extract a video feature from video data related to the detected event and perform conversion processing and encoding processing on the extracted video feature and audio feature. The processor 12 may generate transmission data including the video feature and the audio feature on which the conversion processing and the encoding processing have been performed.

The memory 13 may store input data including the video data and audio data obtained from the camera 20. The memory 13 may store data that are generated while the processor 12 processes the video data and the audio data, and may store the video feature and the audio feature that are generated by the processor 12, the video feature on which the conversion processing and the encoding processing have been performed, the audio feature on which the conversion processing and the encoding processing have been performed, metadata related to the video data and the audio data, etc.

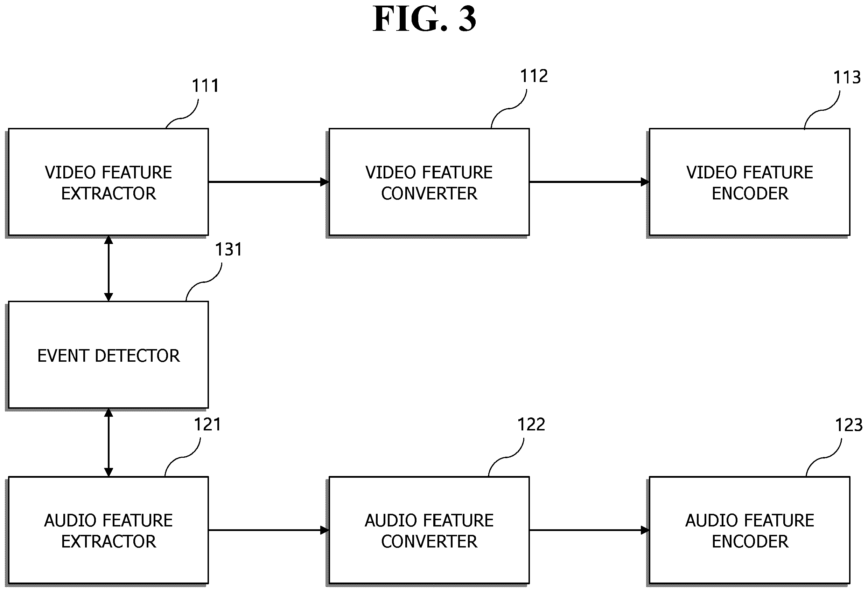

FIG. 3 is a diagram illustrating an example of the configuration of the data processing device according to the present disclosure.

Referring to FIG. 3, the data processing device 10 may include a video feature extractor 111, a video feature converter 112, a video feature encoder 113, an audio feature extractor 121, an audio feature converter 122, an audio feature encoder 123, and an event detector 131.

The video feature extractor 111 may extract a video feature from obtained video data. The audio feature extractor 121 may obtain audio data related to the video data and extract an audio feature from the obtained audio data.

The video feature extractor 111 may extract feature information or a feature map from input video data. The feature information may be called a feature map (or sparse map), a feature vector, a latent vector, or the like. The feature information may be in any possible form extracted from the video feature extractor 111, and may be defined according to at least one of a user, a device, a network type, and an environment.

When the video feature extractor 111 extracts features from input video data, various conventional image processing-based feature extraction techniques may be applied. Further, the video feature extractor 111 may extract features using one or more of deep learning or machine learning-based feature extraction techniques.

The audio feature extractor 121 may extract feature information or a feature map from input audio data. The feature information may be called a feature map (or sparse map), a feature vector, a latent vector, or the like. The feature information may be in any possible form extracted from the audio feature extractor 121, and may be defined according to at least one of a user, a device, a network type, and an environment.

When the audio feature extractor 121 extracts features from input audio data, various conventional sound processing-based feature extracting methods may be applied. Further, the audio feature extractor 121 may extract features using one or more of deep learning or machine learning-based feature extracting techniques.

There is no particular limitation on the method of expressing the feature information extracted by the video feature extractor 111 or the audio feature extractor 121, and the extracted feature information may be expressed in various ways. For example, the expression of the extracted feature information may vary depending on at least one of the type and size of the data, the type and size of the network, and the type and size of the network layer. Further, the extracted feature information may consist of data having at least one characteristic among highly correlated data such as general images, sparse data, and dense data.

The event detector 131 may detect a preset event on the basis of one or more of the video feature and the audio feature. The event detector 131 may generate metadata related to the detected event. The metadata may include information such as the type of event (dangerous situation, situation requiring rescue, situation in which a failure occurs, etc.), information on an object type related to the event (vehicle, person, animal, etc.), detailed information on an object related to the event (when the object is a person, the person's sex, clothing color, etc.), etc.

In an embodiment, the event detector 131 may detect a preset event on the basis of the audio feature. The event detector may be detected an event based on detecting an audio feature corresponding to a unique signature sound that occurs during said event. In an embodiment, the event detector 131 may detect a preset event on the basis of the video feature. The event detector may be detected an event based on detecting a video feature corresponding to a unique signature image sequence that occurs during said event. For example, such image sequence may comprise flashing blue or red lights, or image sequences comprising flames.

The event may include vehicle crashes, firearm firing, graffiti, assaults, robberies, etc. For example, car crashes have (unique signature) sounds of glass breaking, rubber slipping, steel plates crumpling, etc. Firearm firing has (as unique signature sounds) an explosion sound due to a gun being cocked or a sound of a bullet hitting at supersonic speed, etc. Graffiti has (unique signature) sounds such as those made by spray paint being released. Vehicles breaking entry barriers, robberies, etc. are accompanied by (unique signature) sounds resulting from glass breakage or similar impacts. The event detector 131 may determine whether an event has occurred in consideration of data for videos captured at the same time as such sounds.

Further, the event may include an equipment failure event in a product production plant and a defective event in a manufactured product. The equipment failure event in the product production plant may be detected using a unique signature sound that occurs when specific equipment fails. The defective event in the manufactured product may be detected using a unique signature sound that occurs when a specific manufactured product is defective. The event detector 131 may determine whether an event has occurred in consideration of data for videos captured at the same time as such unique signature sounds.

When a preset event is detected by the event detector 131, the video feature converter 112 may perform conversion processing on the video feature, and the video feature encoder 113 may encode the video feature on which the conversion processing has been performed, to generate video feature encoded data.

The video feature converter 112 performs predetermined conversion processing on the extracted video feature. The video feature converter 112 may convert the extracted video feature information as necessary before subsequent encoding processing. The video feature converter 112 may convert the video feature information into a form suitable for compressing and decompressing the video feature information.

The video feature converter 112 may convert the extracted video feature information into another form using various methods. For example, the video feature information may be converted by applying one or more methods of normalization, scaling, rearrangement, representation bit reduction, quantization, and filtering.

The video feature encoder 113 may perform encoding on the converted video feature information. There is no particular limitation on the encoding technique performed by the video feature encoder 113, and encoding techniques based on deep learning and machine learning as well as encoding techniques in conventional video compression standards may be applied.

In one embodiment, deep learning-based video feature encoding may include one or more convolutional layers and a fully connected layer. In this case, the type of filter for the convolutional layer may change depending on one or more of the type, learning type, and size of the feature.

The video feature encoder 113 may perform encoding on the video feature in units of at least one of sample, line, block, and frame. In this case, encoding may be performed in units of at least one of sample, line, block, and frame, depending on at least one of the shape, size, and dimension of input video feature. Further, the video feature encoder 113 may perform prediction-based encoding, binarization-based encoding, entropy-based encoding, or transformation-based encoding.

Further, when a preset event is detected by the event detector 131, the audio feature converter 122 may perform conversion processing on the audio feature, and the audio feature encoder 123 may encode the audio feature on which the conversion processing has been performed, to generate audio feature encoded data.

The audio feature converter 122 performs predetermined conversion processing on the extracted audio feature. The audio feature converter 122 may convert the extracted audio feature information as necessary before subsequent encoding processing. The audio feature converter 122 may convert the audio feature information into a form suitable for compressing and decompressing the audio feature information.

The audio feature converter 122 may convert the extracted video feature information into another form using various methods. For example, the audio feature information may be converted by applying one or more methods of normalization, scaling, rearrangement, representation bit reduction, quantization, and filtering.

The audio feature encoder 123 may perform encoding on the converted audio feature information. There is no particular limitation on the encoding technique performed by the audio feature encoder 123, and encoding techniques based on deep learning and machine learning as well as encoding techniques in conventional audio compression standards may be applied.

In one embodiment, deep learning-based audio feature encoding may include one or more convolutional layers and a fully connected layer. In this case, the type of filter for the convolutional layer may change depending on one or more of the type, learning type, and size of the feature.

The data processing device 10 may generate transmission data including the video feature encoded data and the audio feature encoded data. The transmission data may be transmitted to the monitoring server 30 through a communication network. The transmission data may include metadata related to the detected event.

The transmission data may include a time stamp for synchronization of the video feature and the audio feature. The time stamp is information indicating a time at which a video and an audio are generated. The video data, the video feature, the converted video feature, and the video feature encoded data may each include a time stamp indicating a generation time, and the video and the audio may be synchronized by the time stamps.

When a condition related to the preset event is satisfied in both the video feature and the audio feature, the event detector 131 may determine that the preset event has been detected. In another example, when the condition related to the preset event is satisfied in any one of the video feature and the audio feature, the event detector 131 may determine that the preset event has been detected.

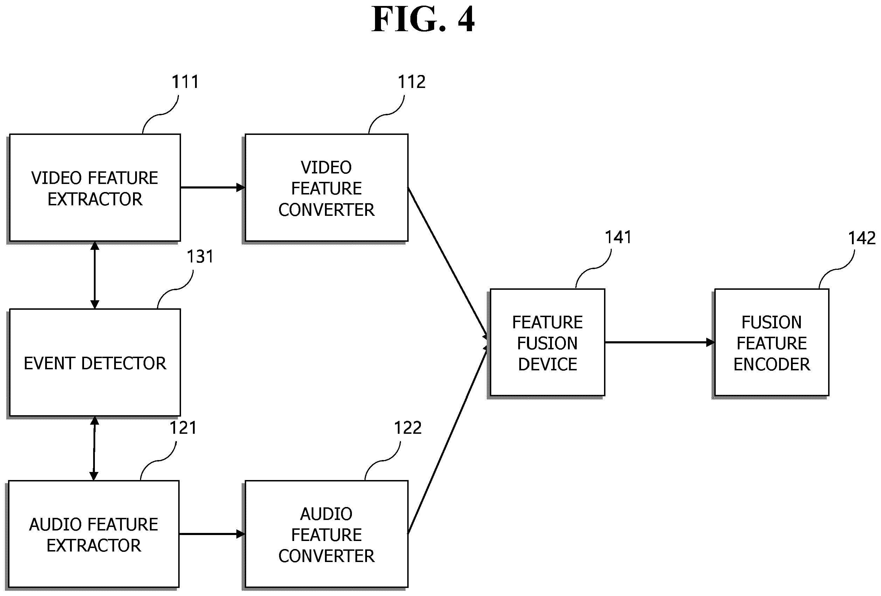

FIG. 4 is a diagram illustrating an example of another configuration of the data processing device according to the present disclosure.

Referring to FIG. 4, the data processing device 10 may include a video feature extractor 111, a video feature converter 112, an audio feature extractor 121, an audio feature converter 122, an event detector 131, a feature fusion device 141, and a fusion feature encoder 142.

Regarding the video feature extractor 111, the video feature converter 112, the audio feature extractor 121, the audio feature converter 122, and the event detector 131, the same description as the data processing device 10 illustrated in FIG. 3 is omitted. The data processing device 10 of FIG. 4 differs from the data processing device 10 illustrated in FIG. 3 in that the converted video feature and the converted audio feature are fused by the feature fusion device 141, and the fused video feature and the fused audio feature are encoded by the fusion feature encoder 142.

The feature fusion device 141 may receive the converted video feature and the converted audio feature and fuse the converted video feature and the converted audio feature to generate fusion feature data. Since the video feature and the audio feature have feature vectors of different dimensions, a process of converting the video feature and the audio feature into video features and audio features of the same dimension is required. For example, when a feature vector of the video feature is a p-dimensional feature vector and a feature vector of the audio feature is a q-dimensional feature vector, fusion feature data obtained by fusing the two feature vectors may have a d-dimensional feature vector.

A single-layer neural network may be used to match feature vectors of two different dimensions to the same d dimension. A rectified linear unit (ReLu) may be used as an activation function of a single-layer neural network. In consideration of differences in distribution of feature vectors, normalization to a unit vector may be performed on the feature vectors. A fused feature vector may be generated by vector synthesis from the feature vectors of the video feature and the audio feature matched to the d dimension.

The fusion feature encoder 142 may perform encoding on the fusion feature data and generate fusion-encoded data. The fusion-encoded data may be included in the transmission data and transmitted to the monitoring server 30.

There is no particular limitation on the encoding technique performed by the fusion feature encoder 142, and encoding techniques based on deep learning and machine learning as well as encoding techniques in conventional video and/or audio compression standards may be applied.

In one embodiment, deep learning-based feature encoding may include one or more convolutional layers and a fully connected layer. In this case, the type of filter for the convolutional layer may change depending on one or more of the type, learning type, and size of the feature.

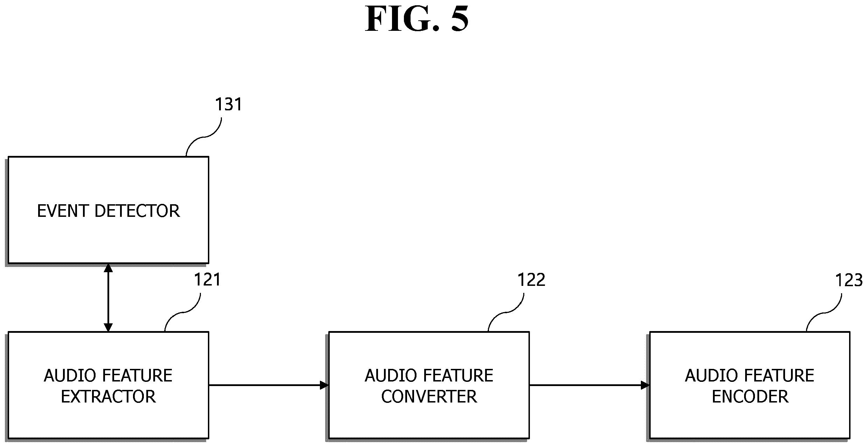

FIG. 5a is a diagram illustrating an example of still another configuration of the data processing device according to the present disclosure.

The data processing device 10 may include an audio feature extractor 121, an audio feature converter 122, an audio feature encoder 123, and an event detector 131. Regarding the audio feature extractor 121, the same descriptions as the audio feature extractor 121, the audio feature converter 122, the audio feature encoder 123, and the event detector 131 illustrated in FIG. 3 are to be omitted.

The audio feature extractor 121 may obtain audio data and extract an audio feature from the obtained audio data.

The event detector 131 may detect a preset event on the basis of the audio feature. When the preset event is detected, the audio feature converter 122 may perform conversion processing on the audio feature. The audio feature encoder 123 may encode the audio feature on which the conversion processing has been performed, to generate audio feature encoded data. The generated audio feature encoded data may be included in transmission data and transmitted to the monitoring server 30.

**FIG. 5b is a diagram illustrating an example of still another configuration of the data processing device according to the present disclosure.**

The data processing device 10 may include a video feature extractor 111, a video feature converter 112, a video feature encoder 113, and an event detector 131. Regarding the video feature extractor 111, the same descriptions as the video feature extractor 111, the video feature converter 112, the video feature encoder 113, and the event detector 111 illustrated in FIG. 3 are to be omitted.

The video feature extractor 111 may obtain video data and extract a video feature from the obtained video data.

The event detector 111 may detect a preset event on the basis of the video feature. When the preset event is detected, the video feature converter 112 may perform conversion processing on the video feature. The video feature encoder 113 may encode the video feature on which the conversion processing has been performed, to generate video feature encoded data. The generated video feature encoded data may be included in transmission data and transmitted to the monitoring server 30.

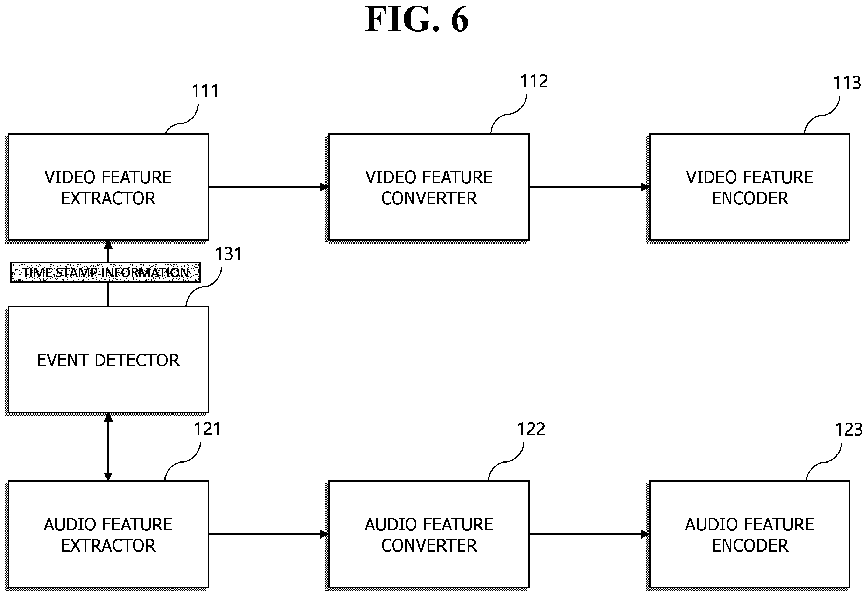

**FIG. 6** **is a diagram illustrating an example of yet another configuration of the data processing device according to the present disclosure.**

Referring to FIG. 6, the data processing device 10 may include a video feature extractor 111, a video feature converter 112, a video feature encoder 113, an audio feature extractor 121, an audio feature converter 122, an audio feature encoder 123, and an event detector 131.

There is a difference between the data processing device 10 of FIG. 3 and the data processing device 10 of FIG. 6 in that the data processing device 10 of FIG. 3 determines whether an event has occurred on the basis of the audio and/or video feature and performs feature conversion and encoding for data transmission when it is determined that the event has occurred, whereas the data processing device 10 of FIG. 6 determines whether an event has occurred on the basis of the audio feature and extracts the video feature from video data related to the detected event when it is determined that the event has occurred.

Among the video feature extractor 111, the video feature converter 112, the video feature encoder 113, the audio feature extractor 121, the audio feature converter 122, the audio feature encoder 123, and the event detector 131 of the data processing device 10 illustrated in FIG. 6, descriptions that are the same as those of the video feature extractor 111, the video feature converter 112, the video feature encoder 113, the audio feature extractor 121, the audio feature converter 122, the audio feature encoder 123, and the event detector 131 of the data processing device 10 illustrated in FIG. 3 are be omitted.

Referring to FIG. 6, the audio feature extractor 121 may obtain audio data and extract an audio feature from the obtained audio data. The event detector 131 may detect a preset event on the basis of the extracted audio feature.

When the preset event is detected, the video feature extractor 111 may extract a video feature from video data related to the detected event. When the preset event is detected, the event detector 131 transmits information on a time stamp (recording time information) at which the event is detected to the video feature extractor 111, and thus the video feature extractor 111 may extract the video feature from the video data corresponding to time information of the event detected using the audio data.

The video feature converter 112 may perform conversion processing on the extracted audio feature. The video feature encoder 113 may perform encoding processing on the audio feature on which the conversion processing has been performed.

When the preset event is detected, the audio feature converter 122 may perform conversion processing on the extracted audio feature. The audio feature encoder 123 may perform encoding processing on the audio feature on which the conversion processing has been performed.

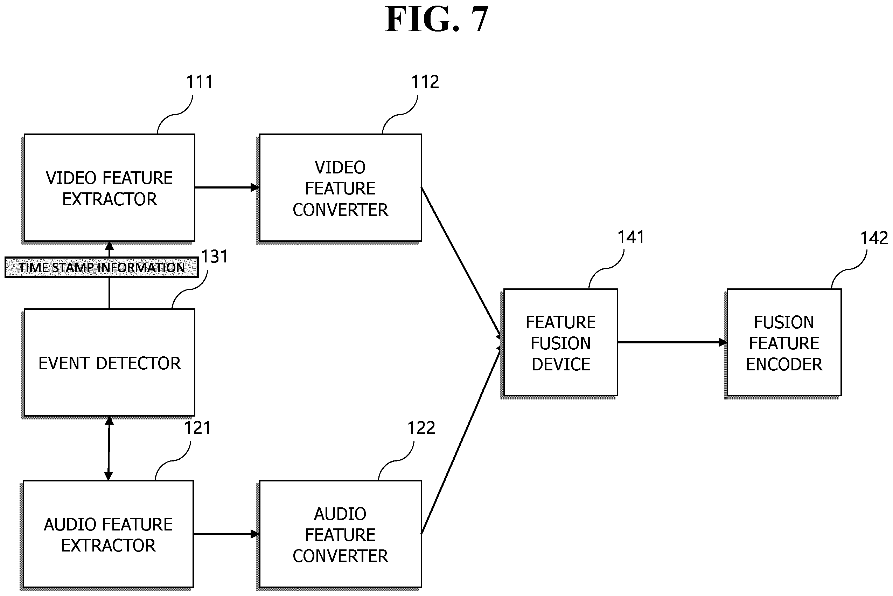

**FIG. 7** **is a diagram illustrating an example of yet another configuration of the data processing device according to the present disclosure.**

Referring to FIG. 7, the data processing device 10 may include a video feature extractor 111, a video feature converter 112, an audio feature extractor 121, an audio feature converter 122, a feature fusion device 141, a fusion feature encoder 142, and an event detector 131.

There is a difference between the data processing device 10 of FIG. 6 and the data processing device 10 of FIG. 7 in that the data processing device 10 of FIG. 6 individually encodes and transmits the audio feature and the video feature after the feature are converted, whereas the data processing device 10 of FIG. 7 fuses the audio feature and the video feature after the feature are converted, and encodes the fused features.

Referring to FIG. 7, the audio feature extractor 121 may obtain audio data and extract an audio feature from the obtained audio data. The event detector 131 may detect a preset event on the basis of the extracted audio feature.

When the preset event is detected, the video feature extractor 111 may extract a video feature from video data related to the detected event. The video feature converter 112 may perform conversion processing on the extracted video feature. Further, when the preset event is detected, the audio feature converter 122 may perform conversion processing on the extracted audio feature.

The feature fusion device 141 may perform fusing processing on the video feature generated by the video feature converter 112 and the audio feature generated by the audio feature converter 122. The fusion feature encoder 142 may perform encoding processing on the features on which the fusing process has been performed.

The feature fusion device 141 and the fusion feature encoder 142 of FIG. 7 will be described with reference to the descriptions of the feature fusion device 141 and the fusion feature encoder 142 of the data processing device 10 of FIG. 4.

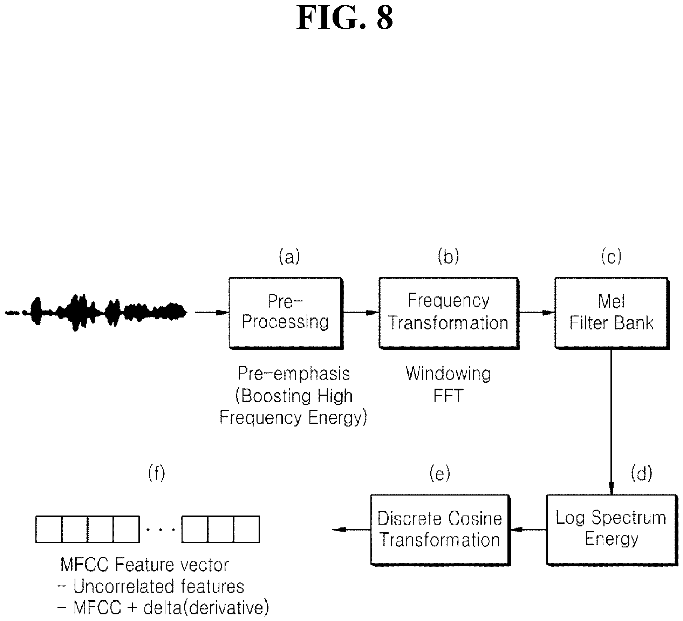

**FIG. 8** **is a diagram illustrating an example of a method of extracting a feature of audio data according to the present disclosure.**

The audio feature extractor 121 may use one method or combine two or more methods among algorithms for extracting features of audio data, such as linear predictive coding (LPC), mel-frequency cepstral coefficients (MFCCs), mel spectrogram, etc., to extract features from audio data. FIG. 8 illustrates a process in which the audio feature extractor 121 extracts an audio feature using an MFCC algorithm.

In FIG. 8, although an example in which the audio feature extractor 121 extracts an audio feature using an MFCC algorithm is illustrated, the technical scope of the present disclosure is not limited to the example, and any algorithms for extracting features from audio data, such as LPC, MFCCs, mel spectrogram, feature extraction by deep learning, etc., may be used to extract the audio feature.

The audio feature extractor 121 may pre-process an audio signal in a time domain and boost high-frequency energy (a). An input audio signal goes through a pre-emphasis filter with high-pass characteristics to model the frequency characteristics of the human outer/middle ear. The audio signal that has gone through the pre-emphasis filter is converted into a digital signal through sampling, quantization, and encoding.

The audio feature extractor 121 may divide the pre-processed audio signal into a plurality of sections and obtain a spectrum in a frequency domain by performing Fourier transform (FFT) (b). Framing processing may be performed by dividing the pre-processed audio signal into sections of 20 ms each. Discontinuous points at both ends of a frame may contain unwanted information when converted into the frequency domain, and accordingly, each frame is multiplied by a window coefficient to minimize discontinuities at start and end points. Hann window, Hamming window, Blackman window, Kaiser window, etc. may be used as a window function.

After framing processing, the frequency characteristics may be determined by converting the signal from the time domain to the frequency domain using a Fast Fourier Transform (FFT) algorithm. Discrete and aperiodic audio signals in the time domain are converted into periodic and continuous signals in the frequency domain through Fourier transform.

The audio feature extractor 121 may obtain the sum of sizes in each band by matching a triangular filter bank tailored to the mel scale to the obtained spectrum (c). By passing a result value obtained by the FFT algorithm through the filter bank, the frequency band may be divided into several filter banks and energy in each bank may be obtained.

The audio feature extractor 121 may take the logarithm of the output value of the filter bank (d) and then perform a discrete cosine transform (DCT) (e) to obtain an MFCC feature vector (f). Since humans feel the loudness of sound as a logarithmic function, the logarithm of the output energy value of each filter bank is taken, and then when a DCT is performed, the energy value is converted into a sinusoidal coefficient of frequency in mel scale. Through this process, a feature vector may be obtained from the audio signal.

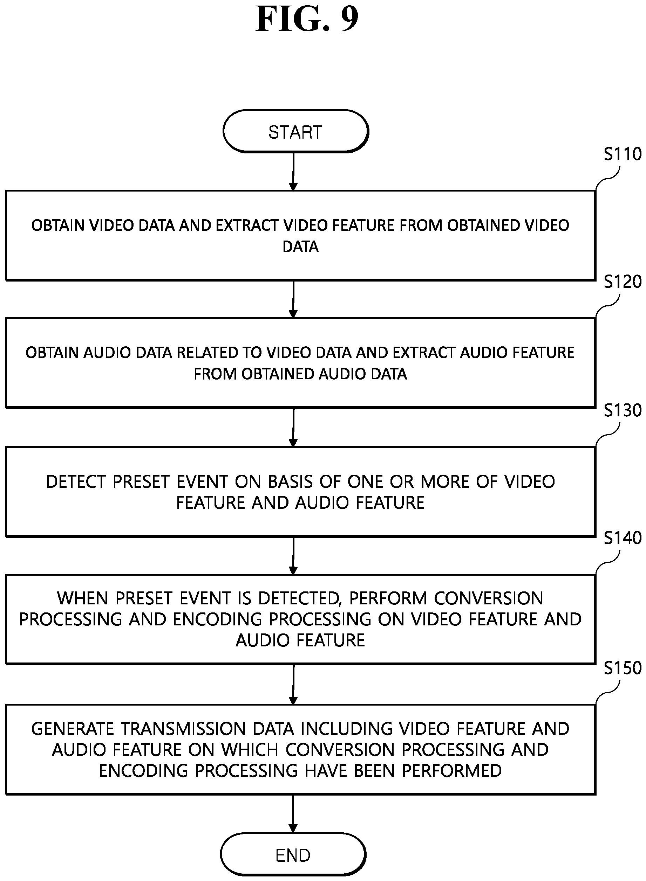

**FIG. 9** **is a flowchart illustrating an example of a method performed by the data processing device according to the present disclosure.**

Referring to FIG. 9, video data may be obtained and a video feature may be extracted from the obtained video data (operation S110). Further, audio data may be obtained and an audio feature may be extracted from the obtained audio data (operation S120).

A preset event may be detected based on one or more of the obtained video data and the obtained audio feature (operation S130). When the preset event is detected, conversion processing and encoding processing may be performed on the video feature and the audio feature (operation S140).

Thereafter, transmission data including the video feature and the audio feature on which the conversion processing and the encoding processing have been performed may be generated (operation S150). The generated transmission data may be transmitted to the monitoring server 30. The detailed descriptions of the data processing device 10 of FIGS. 3 and 4 may be referred to in operations of the method of FIG. 9.

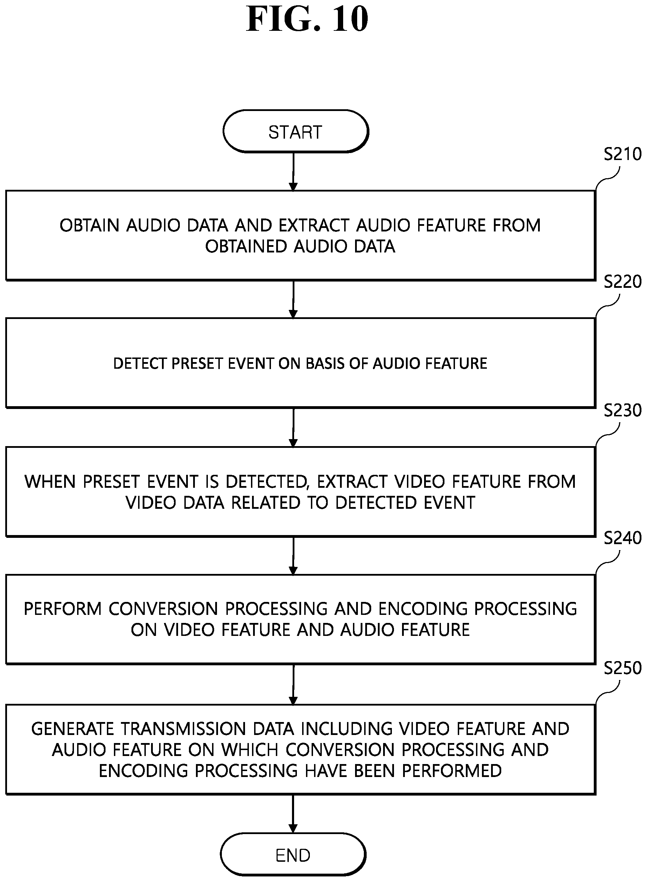

**FIG. 10** **is a flowchart illustrating an example of the method performed by the data processing device according to the present disclosure.**

Referring to FIG. 10, audio data may be obtained and an audio feature may be extracted from the obtained audio data (operation S210). A preset event may be detected based on the audio feature (operation S220).

When the preset event is detected, a video feature may be extracted from video data related to the detected event (operation S230). Conversion processing and encoding processing may be performed on the video feature and the audio feature (operation S240).

Thereafter, transmission data including the video feature and the audio feature on which the conversion processing and the encoding processing haven been performed may be generated (operation S250). The generated transmission data may be transmitted to the monitoring server 30. The detailed descriptions of the data processing device 10 of FIGS. 5 to 7 may be referred to in operations of the method of FIG. 10.

According to the embodiments of the present disclosure, it is possible to improve accuracy of event detection compared to the related art.

Further, according to the embodiments of the present disclosure, it is possible to reduce transmission bandwidth when transmitting video data and audio data according to machine processing.

Embodiments of the present disclosure disclosed in this specification and drawings are only examples to aid understanding of the technical content of the present disclosure and not intended to limit the scope of the present disclosure. It is clear to those skilled in the art that various modifications based on the technological scope of the present disclosure in addition to the embodiments disclosed herein can be made.

## Claims

1. A method for processing data, comprising:
obtaining (S110, S120) video data and audio data and extracting a video feature and/or an audio feature from related obtained video data and/or audio data;
detecting (S130) a preset event on the basis of one or more of the video feature and the audio feature;
performing (S140) conversion processing and encoding processing on the video feature related to the detect event and the audio feature related to the detect event; and
generating (S150) transmission data including the video feature and the audio feature on which the conversion processing and the encoding processing have been performed.

2. The method of claim 1, comprising extracting (S110) a video feature from the obtained video data and extracting (S120) an audio feature from the obtained audio data.

3. The method of claim 1, comprising:
obtaining (S210) audio data and extracting an audio feature from the obtained audio data;
detecting (S220) a preset event on the basis of the audio feature; and
when the preset event is detected, extracting (S230) a video feature from video data related to the detected event.

4. The method of claim 1, comprising:
obtaining video data and extracting a video feature from the obtained video data;
detecting a preset event on the basis of the video feature; and
when the preset event is detected, extracting an audio feature from audio data related to the detected event.

5. The method of claim 2, wherein, in the detecting of the preset event, when a condition related to the preset event is satisfied in both the video feature and the audio feature, it is determined that the preset event has been detected.

6. The method of claim 1, 3 or 4, wherein, in the detecting of the preset event, when a condition related to the preset event is satisfied in any one of the video feature and the audio feature, it is determined that the preset event has been detected.

7. The method of any one of the preceding claims, wherein the performing of the conversion processing and the encoding processing includes:
converting the video feature and encoding the converted video feature to generate video feature encoded data; and
converting the audio feature and encoding the converted audio feature to generate audio feature encoded data.

8. The method of claim 7, wherein the transmission data includes the video feature encoded data and the audio feature encoded data.

9. The method of any one of claims 1 to 5, wherein the performing of the conversion processing and the encoding processing includes:
converting the video feature;
converting the audio feature; and
fusing the converted video feature and the converted audio feature to generate fusion feature data.

10. The method of claim 9, wherein the transmission data includes fusion-encoded data generated by encoding the fusion feature data.

11. The method of any one of the preceding claims, wherein the transmission data includes metadata related to the detected event.

12. The method of any one of the preceding claims, wherein the transmission data includes time stamp information for synchronization of the video feature and the audio feature.

13. The method of any one of the claim 1 to 12, wherein the preset event is detected on the basis of the audio feature corresponding to a unique signature sound that occurs during the preset event and/or wherein the preset event is detected on the basis of the video feature corresponding to a unique signature image sequence that occurs during the preset event.

14. A data processing device (10) comprising:
a memory (13) configured to store input data; and
a processor (12) coupled to the memory,
wherein the processor (12) is configured to perform operations including:
obtaining (S110, S120) video data and audio data and extracting a video feature and/or an audio feature from related obtained video data and/or audio data;
detecting (S130) a preset event on the basis of one or more of the video feature and the audio feature;
performing (S140) conversion processing and encoding processing on the video feature related to the detect event and the audio feature related to the detect event; and
generating (S150) transmission data including the video feature and the audio feature on which the conversion processing and the encoding processing have been performed.

15. A computer program comprising instructions which, when the program is executed by a computer, cause the computer to carry out the method of any one of claims 1 to 14.
